# FASCICULE DE BREVET EUROPEEN

(11) **EP 2 546 488 B1**
(45) Date de publication et mention de la délivrance du brevet: **08.04.2015**
(21) Numéro de dépôt: 12171819.1
(22) Date de dépôt: 13.06.2012
(51) Int. Cl.: F01N 3/28, F01N 13/02, F01N 3/20

(54) **Ensemble coudé de post-traitement des gaz d'échappement d'un moteur à combustion interne comportant un répartiteur d'agent réducteur par impacteur**
Bogenförmige Abgasnachbehandlungsvorrichtung einer Brennkraftmaschine mit Prallplatten-Reduktionsmittelverteiler
Elbow-shaped exhaust gas purification arrangement of an internal combustion engine comprising an impact disperser for reducing agent.

(30) Priorité: 11.07.2011 FR 1156286
(43) Date de publication de la demande: 16.01.2013
(73) Titulaire: PEUGEOT CITROËN AUTOMOBILES SA, 78140 Velizy-Villacoublay (FR)
(72) Inventeur: Ferrand, Nicolas, 78500 Sartrouville (FR); Lere, Sylvain, 75018 Paris (FR); Chapel, Julien, 77380 Combs la Ville (FR)

(56) Documents cités:
- DE-A1- 4 336 632
- JP-A- 2005 155 404
- US-A1- 2002 187 093
- US-A1- 2009 071 133
- US-A1- 2010 083 643

## Description

L'invention porte sur le domaine des moyens de dépollution des gaz d'échappement d'un moteur à combustion.

Les émissions polluantes des moteurs à combustion équipant les véhicules automobiles sont réglementées par des normes de plus en plus sévères. Les polluants réglementés sont, selon la technologie de moteur à combustion considérée, le monoxyde de carbone (CO), les hydrocarbures imbrûlés (HC), les oxydes d'azotes (NOₓ), et les particules.

II est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Par exemple, pour satisfaire aux normes anti-pollution sur les émissions d'oxydes d'azote (NOₓ), un système spécifique de post-traitement peut être introduit dans la ligne d'échappement des véhicules, notamment des véhicules équipés de moteurs à mélange pauvre, c'est-à-dire du type diesel ou à allumage commandé fonctionnant avec un mélange stratifié (mélange carburé non-homogène présentant un taux de carburant inférieur à la stoechiométrie). Pour le traitement des oxydes d'azote (NOₓ), on connaît des technologies de réduction catalytique sélective, ou « SCR » pour « sélective catalytic réduction », qui consistent à réduire les NOₓ par introduction d'un agent réducteur (ou d'un précurseur d'un tel agent réducteur) dans les gaz d'échappement. II peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

Classiquement, le catalyseur SCR est placé sous la caisse du véhicule, loin du moteur car le réducteur injecté nécessite un long parcours dans la ligne d'échappement pour se décomposer d'une part, et des volumes libres suffisants pour être implanté d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée (adblue) ou préchauffage du système de mise à disposition de réducteur (gaz)), souffre de cet éloignement de la sortie du collecteur d'échappement.

II est connu de la demande de brevet français déposée au nom de la demanderesse sous le numéro FR 11 51374 (non publiée à ce jour) un système regroupant les mêmes éléments de dépollution dans une architecture compacte en U. De tels dispositifs peuvent être totalement implantés en sous-capot moteur d'un véhicule automobile. Plus généralement, un dispositif coudé peut permettre une implantation en sous-capot, selon l'application considérée.

L'adoption d'un tel dispositif de post-traitement offre, outre des avantages en termes de performances des moyens de post-traitement, des avantages en termes d'implantation des systèmes dans le véhicule, en permettant la suppression de tout moyen de post-traitement de la zone sous-plancher du véhicule.

II est nécessaire dans tout système SCR d'assurer un bon mélange du réducteur dans les gaz d'échappement préalablement à son arrivée sur le catalyseur SCR.

II est connu d'employer pour favoriser ce mélange un dispositif appelé mélangeur, interposé entre le point d'injection de réducteur et le catalyseur SCR, qui vise à créer des turbulences dans les gaz d'échappement.

II existe de nombreux type de mélangeurs adaptés à cet usage. Les mélangeurs sont optimisés pour réduire autant que possible la longueur de la ligne d'échappement nécessaire à l'obtention d'une bonne homogénéité du mélange réducteur/gaz d'échappement. On connait par exemple au travers du document FR2947003 un mélangeur performant pour assurer un mélange homogène sur une longueur linéaire de ligne d'échappement très courte. On connait également par le document US2010/0083643 un mélangeur formé par un cône muni d'une grille, ce cône étant présenté dans différentes architecture et notamment une architecture en U.

Les mélangeurs sont cependant des dispositifs souvent complexes, et adaptés à une ligne d'échappement dans laquelle les différents dispositifs de dépollutions sont disposés les uns à la suite des autres, dans une disposition longitudinale classique. La plupart des mélangeurs connus sont cylindriques et doivent être disposés dans une enveloppe ou « canning » cylindrique.

Ces dispositifs ne sont pas donc adaptés à une architecture compacte en U ou plus généralement comportant une enveloppe ou « canning » coudée (par exemple une architecture de canning en L), car le mélange ne peut pas être effectué par un mélangeur traditionnel dans des parties non droites et/ou non cylindriques. De plus ces dispositifs engendrent des pertes de charge non négligeables, qui pénalisent la performance du moteur équipé.

On connaît néanmoins du document WO10053033 des moyens de mélange adaptés à une configuration dans laquelle les gaz d'échappement, dans lesquels le réducteur a préalablement été introduit, sont introduits dans une enveloppe contenant un catalyseur SCR positionné à 90° de la direction d'introduction des gaz. Cependant, le système nécessite la préintroduction du réducteur dans les gaz, avant l'entrée dans le canning, et d'autre part n'est pas adaptée à une architecture de canning en U ou en L, mais à une architecture présentant un conduit d'échappement rentrant à 90° dans un canning, pour expulser les gaz d'échappement sur un paroi du canning présentant une géométrie particulière générant un reflux en direction opposée de la direction d'introduction des gaz.

Afin de palier à ces problèmes, la demanderesse a déposé sous le numéro FR1152142 une demande de brevet (non publiée à ce jour) dans laquelle est décrite un ensemble de postraitement coudé, typiquement présentant une géométrie en « U » ou en « L » présentant une enveloppe dotée d'un bossage formant mélangeur de réducteur SCR. Si cette demande présente des moyens simples et efficaces d'obtenir un mélange homogène entre les gaz d'échappement et le réducteur SCR, l'efficacité des moyens qui y sont mis en jeu est dépendante de la dynamique des gaz d'échappement dans l'ensemble de post-traitement.

L'objet de l'invention est de proposer des moyens pour assurer une répartition, homogène d'un fluide introduit dans les gaz d'échappement d'un moteur à combustion, dans le cadre d'une architecture d'un dispositif de post-traitement des gaz d'échappement compact présentant une enveloppe (canning) unique et coudée, par exemple en « U » ou en «L», en tirant profit de cette configuration et de la dynamique de l'injection du réducteur pour garantir cette répartition de manière efficace et indépendante des conditions de fonctionnement du moteur (et donc d'écoulement des gaz d'échappement dans l'ensemble de post-traitement), tout en limitant les pertes de charges générées.

Plus précisément, l'invention porte donc sur un ensemble de post-traitement des gaz d'échappement d'un moteur à combustion, comportant, selon le sens d'écoulement des gaz d'échappement, un catalyseur de réduction catalytique sélective des oxydes d'azote disposé dans une enveloppe coudée, en aval d'un coude de l'enveloppe, l'ensemble comportant en outre un injecteur de réducteur pour la réduction catalytique sélective des oxydes d'azote, disposé de sorte à injecter le réducteur dans le coude (31) et un ou plusieurs impacteurs disposés au droit du coude de manière à être impactés par tout ou partie du réducteur injecté de sorte à le répartir sur toute la section de sortie du coude, chaque impacteur étant constitué d'une plaquette disposée sensiblement orthogonalement au jet l'impactant et fixée directement sur la paroi de ladite enveloppe, chaque plaquette formant impacteur étant disposée dans un plans parallèle à un plan médian du coude de sorte que la surface frontale des impacteurs vis-à-vis du flux des gaz d'échappement soit minimale.

On évite ainsi l'obtention d'une mauvaise répartition du réducteur dans le flux des gaz d'échappement, et en particulier l'obtention d'une forte concentration de réducteur dans une zone opposée à l'injecteur (car un jet d'injecteur a tendance à se concentrer à une distance définie du point d'injection). Ainsi, les impacteurs, sous forme de plaquettes, présentent une faible surface frontale générant une perte de charge vis-à-vis des gaz d'échappement circulant dans l'ensemble selon l'invention. De manière remarquable, cette disposition limite la surface frontale des impacteur tant en entrée qu'en sortie du coude.

De préférence, l'ensemble comporte plusieurs impacteurs qui sont répartis tridimensionnellement dans l'enveloppe.

En effet, chaque impacteur impacté par le réducteur se comporte comme un point d'introduction virtuel de réducteur positionné au niveau de l'impacteur. En disposant les impacteurs de manière répartie, par exemple de manière échelonnée, dans l'ensemble selon l'invention, on obtient l'équivalent d'un ensemble comportant de multiples points d'injections répartis dans la section de l'enveloppe de l'ensemble.

De préférence, le barycentre des projections orthogonales, sur la section de sortie du coude, des zones des impacteurs impactées par le réducteur est confondu avec le barycentre de ladite section de sortie. Cette disposition peut permettre l'obtention d'une répartition homogène et centrée du réducteur dans l'enveloppe.

Selon un mode de réalisation, l'injecteur est du type à jet unique, chaque impacteur interceptant une partie du jet, le jet étant totalement intercepté par les impacteurs. C'est un mode de réalisation permettant l'emploi d'un type d'injecteur simple, fiable et robuste vis-à-vis des problématiques d'encrassement, car doté d'un orifice d'injection de grande dimension. La surface des impacteurs en regard de l'injecteur doit cependant permettre l'interception de l'ensemble du jet.

Selon un autre mode de réalisation, l'injecteur est du type à plusieurs orifices, et les jets issus des différents orifices sont répartis entre plusieurs impacteurs.
Le nombre d'impacteurs peut être modulé en fonction du nombre de jets sortant de l'injecteur. L'inertie du jet de réducteur lui permet de venir impacter les impacteurs d'une manière sensiblement indépendante du débit de gaz d'échappement sortant du moteur, et donc du point de fonctionnement du moteur.

De préférence, chaque jet est projeté sur un impacteur différent. Chaque jet est ainsi employé pour répartir le réducteur dans l'ensemble selon l'invention, selon autant de points d'introduction virtuels qu'il y a de jets.

Dans une variante de l'invention, un mélangeur est en outre disposé entre le coude et le catalyseur de réduction catalytique sélective des oxydes d'azote. Ce mélangeur, qui assure une parfaite homogénéité du mélange entre les gaz d'échappement et le réducteur, pourra être simple, et donc d'un coût de revient faible, car les impacteurs ont préalablement permis l'obtention d'une bonne répartition du réducteur dans le flux des gaz d'échappement.

De préférence, l'enveloppe comporte une forme générale en U. Ainsi, le conduit de liaison entre les deux branches constitutives du « U » est-il employé à l'obtention d'un mélange homogène du réducteur dans les gaz d'échappement.

L'invention porte également sur un véhicule automobile comportant un espace sous-capot moteur avant dans lequel est disposé un moteur à combustion et un ensemble conforme à l'invention.

L'invention est décrite plus en détail ci-après et en référence aux figures représentant schématiquement le système dans son mode de réalisation préférentiel.
La figure 1 présente schématiquement un ensemble de dépollution coudé en « U » tel qu'envisagé dans l'état de la technique.
La figure 2 présente schématiquement un ensemble de dépollution coudé en « U » selon une variante préférentielle de l'invention.
La figure 3 présente schématiquement un ensemble de dépollution coudé en « U » selon autre une variante préférentielle de l'invention.

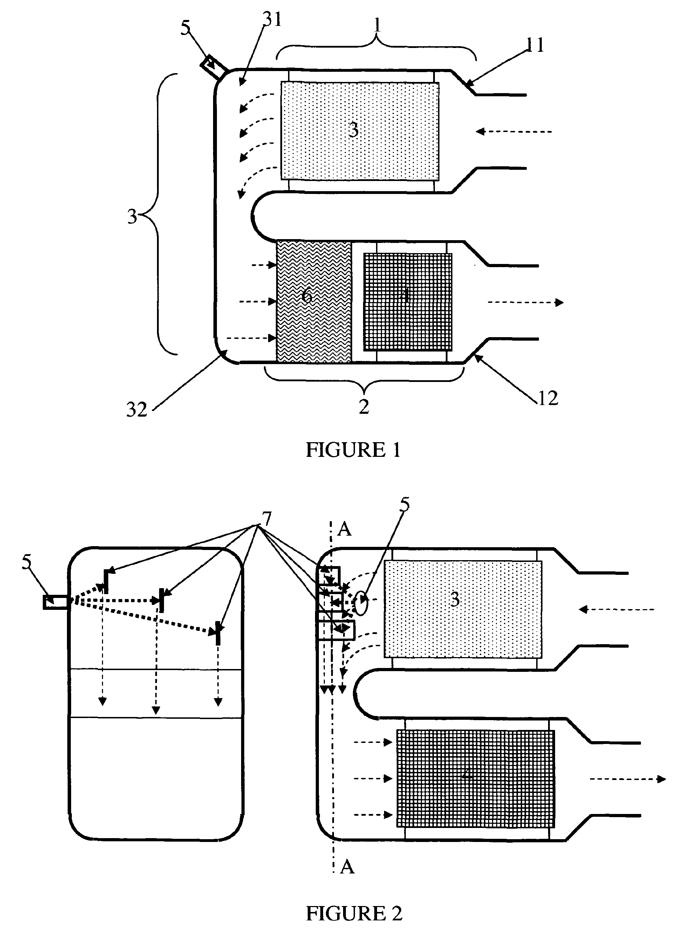

La figure 1 présente schématiquement en coupe un ensemble de traitement des gaz d'échappement coudé en « U » tel qu'envisagé dans l'état de la technique antérieur.

Un tel ensemble présente une enveloppe ou « canning », comportant une première branche rectiligne 1 et une seconde branche rectiligne 2. La première branche 1 et la seconde branche 2 sont destinées à accueillir des pains ou monolithes de traitement des gaz d'échappement prismatiques droits, généralement cylindriques. Les monolithes peuvent notamment être :
- un catalyseur d'oxydation 3, pour le traitement des hydrocarbures imbrûlés (HC) et du monoxyde de carbone (CO) ;
- un catalyseur de réduction catalytique sélective des oxydes d'azote ou catalyseur SCR 4, pour le traitement des oxydes d'azote (NOₓ) ;
- un filtre à particules, pour le piégeage et éventuellement l'oxydation des particules de suie ;
- un filtre à particules portant une imprégnation de réduction catalytique sélective des oxydes d'azote, combinant ainsi les fonctions de filtre à particules et de catalyseur de réduction catalytique sélective des oxydes d'azote.

Typiquement, la première branche 1 peut contenir un catalyseur d'oxydation 3, et la seconde branche 2 peut contenir un catalyseur SCR 4, de type classique ou étant un filtre à particules portant une imprégnation de réduction catalytique sélective des oxydes d'azote.

La première banche comporte un divergent d'entrée 11.

La seconde branche comporte un convergent de sortie 21.

La première et la seconde branche sont reliées par un raccord 3 fluidique, comportant au moins un coude 31, et pouvant tel que l'exemple ici représenté comporter un second coude 32 de sorte à donner à l'ensemble une forme sensiblement en « U ».

Bien que l'ensemble des figures ici présentées portent sur une architecture de dépollution en « U », l'invention est applicable à tout ensemble présentant une enveloppe coudée, et notamment à une architecture en « L » dans laquelle le l'enveloppe présente un seul coude à 90° environ.

En amont du catalyseur SCR (ou du filtre à particules faisant catalyseur SCR) est disposé un moyen d'introduction d'un réducteur SCR (ou d'un précurseur d'un tel agent). Ce moyen d'introduction classiquement être un injecteur 5 dont le nez débouche dans l'ensemble de dépollution.

Tel que précédemment mentionné, il est nécessaire au bon fonctionnement d'un système SCR d'assurer un bon mélange du réducteur dans les gaz d'échappement préalablement à son arrivée sur le catalyseur SCR. II est connu d'employer pour favoriser ce mélange un dispositif appelé mélangeur, interposé entre le point d'injection de réducteur et le catalyseur SCR, qui vise à créer des turbulences dans les gaz d'échappement. Ainsi, il est classiquement envisagé d'intégrer un mélangeur 6 dans la seconde branche 2, juste avant le catalyseur SCR 4.

Ainsi disposé, le mélangeur limite le volume disponible dans la seconde branche pour les moyens de post-traitement.

A la figure 2, on a représenté schématiquement un ensemble conforme à une première variante de l'invention.

On retrouve, dans une enveloppe unique coudée un catalyseur d'oxydation 3 et un catalyseur de réduction catalytique sélective des oxydes d'azote 4 (pouvant être un filtre à particules porteur d'une imprégnation de réduction catalytique sélective des oxydes d'azote). L'enveloppe est coudée entre le catalyseur d'oxydation 3 et le catalyseur de réduction catalytique sélective des oxydes d'azote 4. L'embouchure d'un injecteur 5 de réducteur pour la réduction catalytique sélective des oxydes d'azote disposé de sorte à injecter le réducteur dans le coude 31.

Dans l'invention, l'ensemble comprend en outre un ou plusieurs impacteurs 7 disposés dans le coude de sorte à être impactés par le réducteur injecté et le répartir sur toute la section de sortie du coude. Typiquement, plusieurs impacteurs 7 sont répartis de manière échelonnée dans les trois dimensions.

Cette répartition apparait à la figure 2. La figure de droite est une vue schématique en coupe d'un ensemble conforme à une variante préférentielle de l'invention, dans laquelle l'enveloppe de l'ensemble présente une forme générale en « U ». La figure de gauche correspond à une vue schématique en coupe selon le plan de coupe A-A du même ensemble.

A la figure de droite, on peut voir la répartition des impacteurs dans une première direction ; à la figure de gauche, on peut voir la répartition des impacteurs selon les deux autres directions. Ainsi disposés, et associés à l'emploi d'un injecteur 5 présentant une buse à jets multiples, chacun des jets impactant un impacteur différent, le système se comporte sensiblement comme si on multipliait les points d'injection dans l'ensemble de post-traitement, avec un point d'injection virtuel au niveau de chaque impacteur 7. Cela permet une bonne répartition du réducteur en sortie du coude 21. Notamment, dans le cadre d'une architecture d'ensemble de post-traitement en U, le raccord fluidique peut avantageusement présenter une section aplatie, dans laquelle l'obtention d'une répartition homogène du réducteur serait difficile à atteinte avec une injection du réducteur en un unique point.

De manière préférentielle et tel que dans le mode de réalisation ici représenté, les impacteurs 7 sont formés de plaquettes disposés dans des plans parallèles au plan médian de l'enveloppe. Ainsi, les plaquettes sont disposées de sorte que la surface frontale des impacteur vis-à-vis du flux des gaz d'échappement dans l'ensemble selon l'invention est minimale, de sorte à limiter les pertes de charge générées par les impacteurs 7.

On a présenté schématiquement sur toutes les figures la direction des flux gazeux et de réducteur par des flèches en pointillés.

On comprend que l'emploi d'impacteur 7 sous forme de plaquettes pour répartir l'agent réducteur est particulièrement adaptée à une architecture coudée, les impacteurs étant disposés dans le coude, dans la mesure où leur orientation permet de ne pas générer de perte de charge important tant en entrée qu'en sortie du coude, car la surface frontale des impacteurs est faible tant vis-à-vis de l'écoulement des gaz entrant dans le coude 31 que des gaz sortant du coude.

La répartition sensiblement homogène de l'agent réducteur sur toute la section de sortie du coude est sensiblement indépendante du flux des gaz d'échappement dans l'ensemble. En effet, en adoptant une pression d'injection suffisante du réducteur, la légère déviation des jets de réducteur n'empêche pas l'impact de ces jets sur les impacteurs 7.

Le coude 31 est ainsi mis à profit pour favoriser le mélange et/ou la décomposition de l'agent réducteur (ou de son précurseur) avant l'entrée dans le catalyseur SCR.

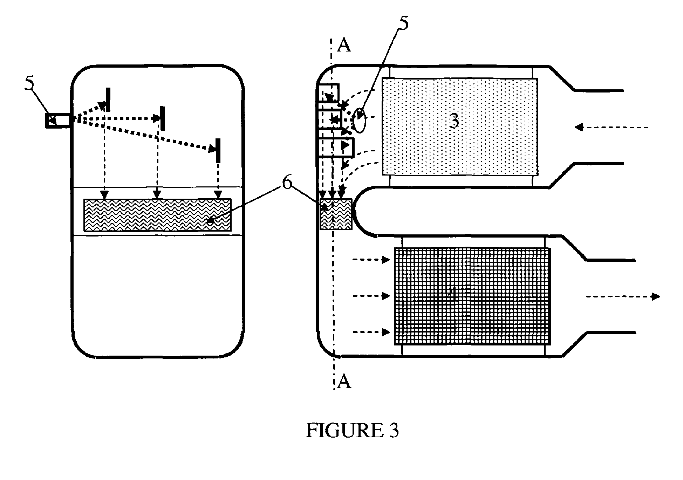

Dans la variante de l'invention présentée en figure 3, un mélangeur 6 permet d'accroitre les turbulences et/ou la distance de parcours des gaz d'échappement entre la sortie du coude et l'entrée du catalyseur SCR, de sorte à favoriser le mélange homogène ou de l'agent réducteur ou la décomposition de son précurseur suite à la répartition, grâce aux impacteurs ,de l'élément injecté dans la veine gazeuse.

L'invention offre ainsi de multiples avantages. L'emploi d'un ou plusieurs impacteurs permet :
- l'obtention d'un mélange homogène dans l'ensemble de traitement des gaz d'échappement, sans générer de perte de charge importante ;
- d'optimiser le volume disponible pour les monolithes de post-traitement dans la seconde branche d'un ensemble coudé, le coude étant mis à profit pour assurer le mélange du réducteur ;
- de limiter l'encrassement résultant de sous composés d'une solution d'urée (employée comme précurseur d'agent réducteur), car le jet impacte des pièces (impacteurs) baignées dans le flux de gaz des gaz d'échappement (ce qui est moins favorable à l'encrassement que l'air ambiant) ;
- d'assurer la fonction de répartition et de mélange à un faible coût de revient ;
- d'assurer la fonction de répartition et de mélange de manière indépendante du flux des gaz d'échappement dans l'ensemble, c'est-à-dire de manière indépendantes des conditions d'utilisation du moteur produisant les gaz d'échappement traités par l'ensemble.

## Revendications

1. Ensemble de post-traitement des gaz d'échappement d'un moteur à combustion, comportant, selon le sens d'écoulement des gaz d'échappement, un catalyseur de réduction catalytique sélective des oxydes d'azote (4) disposé dans une enveloppe coudée en aval d'un coude (31) de l'enveloppe, l'ensemble comportant en outre un injecteur (5) de réducteur pour la réduction catalytique sélective des oxydes d'azote, disposé de sorte à injecter le réducteur dans le coude (31) et un ou plusieurs impacteurs (7) disposés de manière à être impactés par tout ou partie du réducteur injecté de sorte à le répartir sur toute la section de sortie du coude (31), **caractérisé en ce que** chaque impacteur (7) est constitué d'une plaquette disposée sensiblement orthogonalement au jet l'impactant et fixée directement sur la paroi de ladite enveloppe, chaque plaquette formant impacteur (7) étant disposée dans un plan parallèle à un plan médian du coude de sorte que la surface frontale des impacteurs vis-à-vis du flux des gaz d'échappement soit minimale.

2. Ensemble selon la revendication 1, comportant plusieurs impacteurs (7) répartis tridimensionnellement dans l'enveloppe.

3. Ensemble selon la revendication 2, dans lequel le barycentre des projections orthogonales, sur la section de sortie du coude, des zones des impacteurs (7) impactées par le réducteur est confondu avec le barycentre de ladite section de sortie.

4. Ensemble selon la revendication 2 ou la revendication 3, dans lequel l'injecteur (5) est du type à jet unique, chaque impacteur (7) interceptant une partie du jet, le jet étant totalement intercepté par les impacteurs (7).

5. Ensemble selon la revendication 2 ou la revendication 3 dans lequel l'injecteur (5) est du type à plusieurs orifices, et dans lequel les jets issus des différents orifices sont répartis entre plusieurs impacteurs (7).

6. Ensemble selon la revendication 5, dans lequel chaque jet est projeté sur un impacteur (7) différent.

7. Ensemble selon l'une quelconque des revendications précédentes, dans lequel un mélangeur (6) est en outre disposé entre le coude (31) et le catalyseur de réduction catalytique sélective des oxydes d'azote (4).

8. Ensemble selon une des revendications précédentes, dans lequel l'enveloppe présente une forme générale en U.

9. Véhicule automobile comportant un espace sous-capot moteur avant dans lequel est disposé un moteur à combustion et un ensemble selon l'une des revendications précédentes.

## Patentansprüche

1. Abgasnachbehandlungsvorrichtung einer Brennkraftmaschine, die entlang der Strömungsrichtung der Abgase einen Katalysator mit selektiver katalytischer Reduktion der Stickstoffoxide (4) aufweist, der in einem abgewinkelten Mantel stromabwärts eines Winkelstücks (31) des Mantels angeordnet ist, wobei die Einheit ferner eine Reduktionsmitteleinspritzdüse (5) für die selektive katalytische Reduktion der Stickstoffoxide aufweist, die derart angeordnet ist, dass das Reduktionsmittel in das Winkelstück (31) einspritzt wird, und einen oder mehrere Impaktoren (7), die derart angeordnet sind, dass das gesamte oder ein Teil des eingespritzten Reduktionsmittels derart auf sie aufprallt, dass es auf dem gesamten Ausgangsabschnitt des Winkelstücks (31) verteilt wird, **dadurch gekennzeichnet, dass** jeder Impaktor (7) aus einem Plättchen besteht, das im Wesentlichen senkrecht zu dem auf ihn prallenden Strahl angeordnet und direkt auf der Wand des Mantels befestigt ist, wobei jedes Plättchen, das einen Impaktor (7) bildet, in einer Ebene angeordnet ist, die parallel zu einer Mittenebene des Winkelstücks derart liegt, dass die frontale Oberfläche der Impaktoren gegenüber dem Strom der Abgase minimal ist.

2. Einheit nach Anspruch 1, die mehrere Impaktoren (7) aufweist, die dreidimensional in dem Mantel verteilt sind.

3. Einheit nach Anspruch 2, bei der der Schwerpunkt der orthogonalen Spritzer auf dem Ausgangsabschnitt des Winkelstücks, den Zonen der Impaktoren (7), auf die das Reduktionsmittel aufprallt, mit dem Schwerpunkt des Ausgangsabschnitts zusammenfällt.

4. Einheit nach Anspruch 2 oder Anspruch 3, bei der die Einspritzdüse (5) des Typs mit einem einzigen Strahl ist, wobei jeder Impaktor (7) einen Teil des Strahls abfängt, wobei der Strahl von den Impaktoren (7) vollständig abgefangen wird.

5. Einheit nach Anspruch 2 oder Anspruch 3, bei der die Einspritzdüse (5) des Typs mit mehreren Öffnungen ist, und bei der die aus den verschiedenen Öffnungen stammenden Strahlen auf mehrere Impaktoren (7) verteilt sind.

6. Einheit nach Anspruch 5, bei dem jeder Strahl auf einen unterschiedlichen Impaktor (7) gespritzt wird.

7. Einheit nach einem der vorhergehenden Ansprüche, bei dem eine Mischvorrichtung (6) ferner zwischen dem Winkelstück (31) und dem Katalysator zur selektiven katalytischen Reduktion der Stickstoffgase (4) angeordnet ist.

8. Einheit nach einem der vorhergehenden Ansprüche, bei der der Mantel eine allgemeine U-Form aufweist.

9. Kraftfahrzeug, das einen Raum unter der vorderen Motorhaube aufweist, in dem eine Brennkraftmaschine und eine Einheit nach einem der vorhergehenden Ansprüche angeordnet sind.

## Claims

1. An assembly for post-processing of the exhaust gases of an internal combustion engine comprising, along the direction of flow of the exhaust gases, a catalyst (4) for selective catalytic reduction of the nitrogen oxides disposed in a bent envelope downstream of an elbow (31) of the envelope, the assembly further comprising an injector (5) of reducer for the selective catalytic reduction of the nitrogen oxides, disposed so as to inject the reducer in the elbow (31) and one or several impactors (7) disposed so as to be impacted by all or part of the reducer injected so as to distribute it over the entire outlet section of the elbow (31), **characterized in that** each impactor (7) is constituted by a plate disposed substantially orthogonally to the jet impacting it and fixed directly on the wall of said envelope, each plate forming an impactor (7) being disposed in a plane parallel to a median plan of the elbow such that the frontal surface of the impactors with respect to the flow of the exhaust gases is minimal.

2. The assembly according to Claim 1, comprising several impactors (7) distributed three-dimensionally in the envelope.

3. The assembly according to Claim 2, in which the barycentre of the orthogonal projections, on the outlet section of the elbow, of the zones of the impactors (7) impacted by the reducer is aligned with the barycentre of said outlet section.

4. The assembly according to Claim 2 or Claim 3, in which the injector (5) is of the single-jet type, each impactor (7) intercepting a portion of the jet, the jet being totally intercepted by the impactors (7).

5. The assembly according to Claim 2 or Claim 3, in which the injector (5) is of the type having several orifices, and in which the jets issued from the different orifices are distributed between several impactors (7).

6. The assembly according to Claim 5, in which each jet is projected on a different impactor (7).

7. The assembly according to any one of the preceding claims, in which a mixer (6) is disposed in addition between the elbow (31) and the catalyst for selective catalytic reduction of the nitrogen oxides (4).

8. The assembly according to one of the preceding claims, in which the envelope has a general U-shape.

9. A motor vehicle comprising a front under-bonnet engine space in which is disposed an internal combustion engine and an assembly according to one of the preceding claims.
